**Europäisches Patentamt**

**European Patent Office**

**Office européen des brevets**

(19)

(11) Veröffentlichungsnummer: **0 291 792 B1**

# EUROPÄISCHE PATENTSCHRIFT

(12)

(45) Veröffentlichungstag der Patentschrift:
**10.07.91 Patentblatt 91/28**

(51) Int. Cl.$^5$: **F02D 13/02, F02B 29/08**

(21) Anmeldenummer: **88107365.4**

(22) Anmeldetag: **07.05.88**

(54) **Ladungswechsel-Verfahren für eine 4-Takt-Hubkolben-Brennkraftmaschine.**

(30) Priorität: **20.05.87 DE 3716947**

(43) Veröffentlichungstag der Anmeldung:
**23.11.88 Patentblatt 88/47**

(45) Bekanntmachung des Hinweises auf die
Patenterteilung:
**10.07.91 Patentblatt 91/28**

(84) Benannte Vertragsstaaten:
**DE ES FR GB IT SE**

(56) Entgegenhaltungen:
**DE-A- 3 112 059**
**DE-A- 3 150 883**
**DE-A- 3 429 414**
**US-A- 1 871 115**
**US-A- 4 174 683**

(73) Patentinhaber: **Bayerische Motoren Werke
Aktiengesellschaft
Patentabteilung AJ-30 Postfach 40 02 40
Petuelring 130
W-8000 München 40 (DE)**

(72) Erfinder: **Gartner, Jurij
Planeggerstrasse 11
W-8034 Germering (DE)**
Erfinder: **Langen, Peter
Magdalenenstrasse 37
W-8000 München 19 (DE)**

## Beschreibung

Die Erfindung bezieht sich auf ein Ladungswechsel-Verfahren für eine 4-Takt-Hubkolben-Brennkraftmaschine nach dem Oberbegriff von Anspruch 1.

Üblicherweise erfolgt die Frischgas- bzw. Ladungszufuhr zum Zylinder während des sogenannten Saugtaktes, also dann, wenn sich — nachdem zuvor die verbrannte Ladung (abgas) ausgeschoben wurde — der Kolben von seinem oberen Totpunkt in Richtung seines unteren Totpunktes bewegt. Insbesondere bei quantitätsgesteuerten Brennkraftmaschinen stellt sich damit im Teillastbetrieb nur eine ungenügend hohe — für einen optimalen Verbrennungsablauf jedoch erwünschte — Verwirbelung des Frischgases bzw. der Ladung ein. Zwar erzeugt der Kolben während seiner Abwärtsbewegung unter Energieverbrauch Unterdruck, welcher dazu genutzt wird, die Ladung mit hoher Geschwindigkeit in den Zylinder einströmen zu lassen, wobei an der Drosselstelle (zumeist einer Drosselklappe) eine vorteilhafte Verwirbelung entsteht, jedoch beruhigt sich diese Verwirbelung wieder auf den relativ langen Wegen von der Drosselstelle zum Zylinderbrennraum, so daß zum Zeitpunkt der später stattfindenden Verbrennung bzw. Zündung der Ladung keine ausreichende Wirbelbewegung mehr vorhanden ist.

Aus der DE-OS 31 12 059 ist eine Maßnahme zur verbesserten Ladungsverwirbelung bekannt, wobei ein zusätzliches als Rückschlagventil ausgebildetes Zylinder-Einlaßorgan vorgesehen ist, über welches dem Zylinder Luft unter einem derart gewählten Druck zugeführt wird, daß das Rückschlagventil auch während einer Anfangsphase des Verdichtungstaktes geöffnet bleibt. Eine lange anhaltende Verwirbelung ist hiermit aber nur dann gewährleistet, wenn der Druck der über das Rückschlagventil zugeführten Luft zumindest in Höhe des Kompressionsenddruckes im Zylinder liegen würde. Somit ist diese Maßnahme für Fahrzeug-Brennkraftmaschinen praktisch nicht durchführbar.

Aufgabe der Erfindung ist es daher, ein Ladungswechselverfahren bereitzustellen, welches eine starke Frischgas- bzw. Ladungs verwirbelung bzw. hohe Ladungs-Strömungsgeschwindigkeiten auch zum Zeitpunkt der Ladungszündung sicherstellt. Diese Aufgabe wird durch die kennzeichnenden Merkmale des ersten Anspruchs gelöst.

Erfolgt die Frischgaszufuhr zum Zylinder im wesentlichen erst während des Verdichtungstaktes, so herrscht im Zylinder ein derart hoher Unterdruck, daß sich mit dem Öffnen des die Frischgaszufuhr freigebenden Steuerorganes eine hohe Strömungsgeschwindigkeit und damit eine hohe Verwirbelung einstellt. Um jene Verwirbelung bis zum Ladungszündzeitpunkt aufrecht zu erhalten, muß dabei verhindert werden, daß das zugeführte Frischgas noch während jenes Verdichtungstaktes zumindest teilweise wieder ausgeschoben wird. Dies ergäbe nämlich eine Richtungsumkehr der Ladungsströmung, wodurch die für eine gute Verwirbelung erforderliche hohe Strömungsgeschwindigkeit herabgesetzt werden würde. Dieser Effekt läßt sich beispielsweise auch mit Hilfe von Ladungswechselprogrammen berechnen.

Zwar wird bei einem Verfahren nach der US-A-1 871 115 ein gasförmig aufbereiteter Brennstoffnebel auch erst im Verdichtungstakt zugeführt, das Frischgas hingegen gelangt auch dort wie üblich im Saugtakt in den Zylinder.

Verhindert werden kann ein derartiges Ausschieben beispielweise durch Verwendung eines Rückschlagventiles oder gemäß Anspruch 2 durch entsprechendes Ansteuern des den Zylindereintritt zur Frischgas- bzw. Ladungszufuhr freigebenden Steuerorganes. Dieses bleibt dabei nur solange geöffnet, bis sich die für den jeweiligen Betriebspunkt der Brennkraftmaschine erforderliche Ladung im Zylinder befindet ; vorteilhafterweise wird dabei die Öffnungszeitspanne in die Nähe des Ladungszündzeitpunktes gelegt, da dann eine besonders intensive Verwirbelung aufgrund hoher Strömungsgeschwindigkeiten sichergestellt ist. Insbesondere geeignet ist jenes Verfahren für eine quantitätsgesteuerte Brennkraftmaschine, da hierbei nur der durch den jeweiligen Betriebspunkt vorgegebene tatsächlich erforderliche Hubraum befüllt wird. Die Laststeuerung jener nach dem erfindungsgemäßen Ladungswechsel-Verfahren arbeitenden Brennkraftmaschine kann somit alleinig durch eine entsprechende Variation der Öffnungsdauer des den Zylindereintritt zur Frischgas- bzw. Ladungszufuhr freigebenden Steuerorganes erfolgen. Drosselverluste, wie sie beispielsweise an einer herkömmlichen Drosselklappe auftreten, werden somit vermieden.

Ist jenes Steuerorgan dabei als Hubventil ausgebildet, so ist es besonders vorteilhaft, neben der Öffnungsdauer, welche letztendlich vom Öffnungszeitpunkt und vom Schließzeitpunkt bestimmt ist, zusätzlich den maximalen Ventilhub — hierdurch wird die Strömungsgeschwindigkeit abermals erhöht oder zumindest in ihrer Richtung beeinflußt — und somit die gesamte Ventilerhebungskurve dem jeweiligen Betriebspunkt der Brennkraftmaschine anzupassen.

Nach Anspruch 4 erfolgt bei einem erfindungsgemäßen Ladungswechsel-Verfahren die Abfuhr der verbrannten Ladung derart gesteuert, daß sich zum Öffnungszeitpunkt des die Ladungszufuhr freigebenden Steuerorganes noch ein Rest von verbrannter Ladung im Zylinder befindet. Auf diese Weise können die gegen Ende des Saugtaktes im Zylinder auftretenden Unterdruckwerte in ihrer Höhe begrenzt werden.

Zwar ist auch aus der DE-OS 34 01 362 ein Verfahren zur Steuerung von 4-Takt-Kolbenbrennkraftmaschinen bekannt geworden, bei welchem nach dem Ausschiebetakt eine bestimmte Abgasmenge im Zylinder vorhanden ist und dadurch das verbleibende Zylindervolumen für die Aufnahme von Frischgemisch zum Zwecke der Laststeuerung reduziert wird, jedoch erfolgt dabei die Ladungszufuhr wie üblich während des Saugtaktes, also während der Abwärtsbewegung des Kolbens. Jenes bekannte Verfahren hat den Nachteil, daß, um die Zündwilligkeit der Zylinderladung zu gewährleisten, nur geringe Abgasmengen im Zylinder verbleiben können. Deutlich höhere Restmengen von verbrannter Ladung sind jedoch möglich, wenn gemäß dem erfindungsgemäßen Verfahren die Ladungszufuhr erst während des Verdichtungstaktes und somit zeitlich kurz vor dem Ladungszündzeitpunkt erfolgt, da dann der im Zylinder herrschende Unterdruck hohe Strömungsgeschwindigkeiten und somit eine besonders intensive Ladungsverwirbelung hervorruft.

In ähnlicher Weise kann das die Ladungszufuhr freigebende Steuerorgan zusätzlich kurzzeitig während des Saugtaktes geöffnet werden. Während dieser Öffnungsphase gelangt eine kleine Ladungsmenge eventuell fetten Gemisches in den Zylinder, welche sich während des Verdichtungstaktes mit der dann zugeführten wesentlichen Ladungsmenge vermischt. Hiermit werden nicht nur optimale Zündbedingungen geschaffen, sondern daneben auch der sich während des Saugtaktes einstellende Unterdruck im Zylinder in seiner Höhe begrenzt.

Bei einer nach dem erfindungsgemäßen Verfahren arbeitende Brennkraftmaschine können die Hubventile hydraulisch frei ansteuerbar sein, wie dies beispielsweise in der DE-OS 20 06 304 gezeigt ist. Jene Schrift erwähnt im übrigen auch die Möglichkeit, das Einlaßventil zum Zwecke der Verbesserung der Gemischaufbereitung bei abnehmender von der Brennkraftmaschine abzugebender Leistung näher dem Zeitpunkt zu öffnen, zu welchem der Kolben während seines Saughubes die maximale Geschwindigkeit hat. Eine Anregung für ein erfindungsgemäßes Ladungswechsel-Verfahren ist in jener Schrift jedoch nicht enthalten. Ebenso können die Hubventile magnetisch frei ansteuerbar sein, auch hierfür sind bereits zahlreiche Ausführungsbeispiele bekannt geworden.

Das erfindungsgemäße Verfahren ist aber auch an mit Nockenwellen versehenen Brennkraftmaschinen durchführbar. Zur Variation von Öffnungs- und Schließzeitpunkt ist dabei die Nockenwelle gegenüber der sie antreibenden Kurbelwelle verdrehbar ausgebildet. Eine Anordnung hierfür ist beispielsweise aus der DE-OS 28 42 154 bekannt geworden. Zur Beeinflussung des vom Nocken vorgegebenen Ventilhubverlaufes kann dabei zwischen dem Nocken und dem Hubventil eine Steuervorrichtung vorgesehen sein, wie sie beispielsweise aus der DE-AS 24 48 311 bekannt geworden ist. Alternativ kann der Nocken aber auch als ein beispielsweise in der DE-AS 25 05 757 gezeigter Raumnocken ausgebildet sein.

Um den Zylinderbrennraum wegen der beim erfindungsgemäßen Ladungswechsel-Verfahren oftmals auftretenden hohen Unterdruckwerte wirkungsvoll gegen das Kurbelgehäuse bzw. den Kurbelraum abzudichten, kann der Kolben zumindest mit einem entsprechenden (zusätzlichen) Kolbenring versehen sein.

Ausführungsbeispiele für eine erfindungsgemäß arbeitende Brennkraftmaschine werden — da konstruktive Details hierzu nicht Wesen der vorliegenden Erfindung sind — hier nicht gezeigt. Vielmehr sind zur Erläuterung dargestellt :

Fig. 1 ein prinzipiell möglicher Ventilhubverlauf,

Fig. 2 ein p-V-Diagramm für ein erfindungsgemäßes Ladungswechsel-Verfahren mit verschiedenen Brennkraftmaschinen-Lasten, wobei die Ladungswechselschleife sowie die Verbrennungsschleife nicht maßstabsgerecht dargestellt sind,

Fig. 3 die Ladungswechselschleife als Ausschnitt eines p-V-Diagrammes für ein erfindungsgemäßes Ladungswechsel-Verfahren sowie ein herkömmliches, gedrosseltes Ladungswechsel-Verfahren, jeweils im Teillastbetrieb.

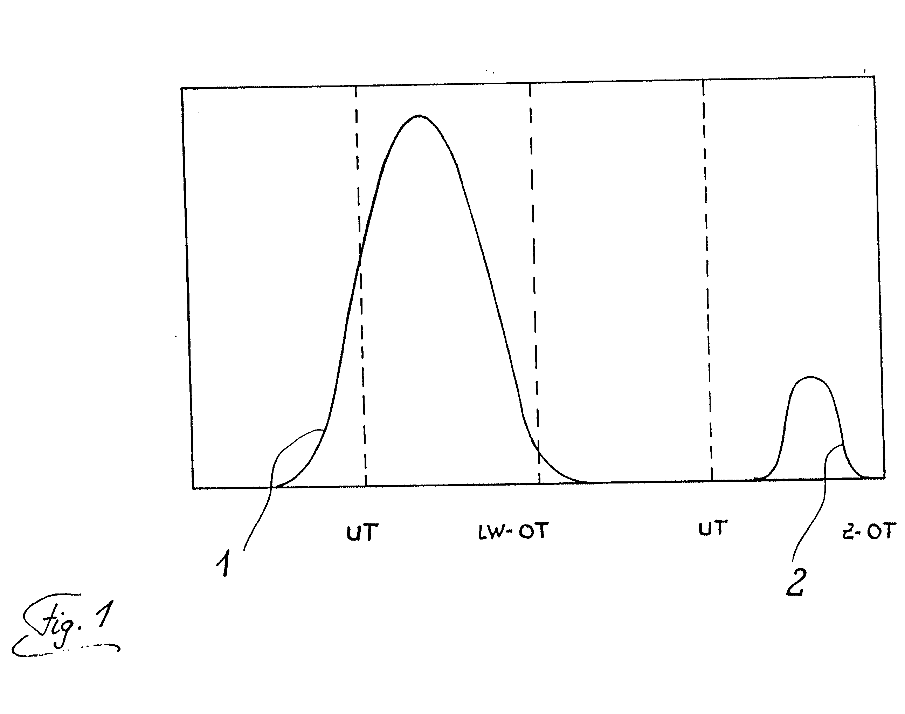

In Fig. 1 ist der untere Totpunkt des Kolbens mit UT, der obere Totpunkt während der Ladungswechselphase mit LW-OT und der obere Totpunkt während der Zündphase mit Z-OT gekennzeichnet. Die mit der Ziffer 1 bezeichnete Ventilerhebungskurve bezieht sich auf ein Auslaßventil, während die mit 2 bezeichnete Kurve eine erfindungsgemäße Einlaßventilerhebungskurve darstellt. Wesentlich dabei ist, daß das Einlaßventil erst dann öffnet, wenn der Kolben seinen unteren Totpunkt überschritten hat und sich wieder im Verdichtungstakt befindet. Aufgrund des dann im Zylinderbrennraum herrschenden hohen Unterdruckes erreicht die Ladung bei der Befüllung eine solch hohe Strömungsgeschwindigkeit, daß eine intensive Verwirbelung im Zylinderbrennraum stattfindet. Da das Einlaßventil erst während des Verdichtungstaktes geöffnet wird, bleibt diese Verwirbelung bis zu dem kurz vor OT stattfindenden Ladungszündzeitpunkt erhalten. Ein Ausschieben der frischen Ladung durch den Kolben wird dabei vermieden, indem das Einlaßventil nur so lange geöffnet ist, bis sich die für den jeweiligen Betriebspunkt der Brennkraftmaschine erforderliche Ladung im Zylinder befindet, bis also der jeweils effektive Hubraum, welcher durch den Schließzeitpunkt des Einlaßventiles bestimmt ist, befüllt ist.

Wie ersichtlich, bleibt das Auslaßventil teilweise über den oberen Totpunkt hinaus geöffnet. Damit wird vorteilhafterweise eine Teilmenge verbrannter Ladung angesaugt, wodurch der sich im Zylinderbrennraum bildende Unterdruck in seiner Höhe begrenzt wird. Durch entsprechende Variation der Ventilerhebungskurve 1 des Auslaßventiles sind verschiedene Restgasanteile im Zylinderbrennraum einstellbar.

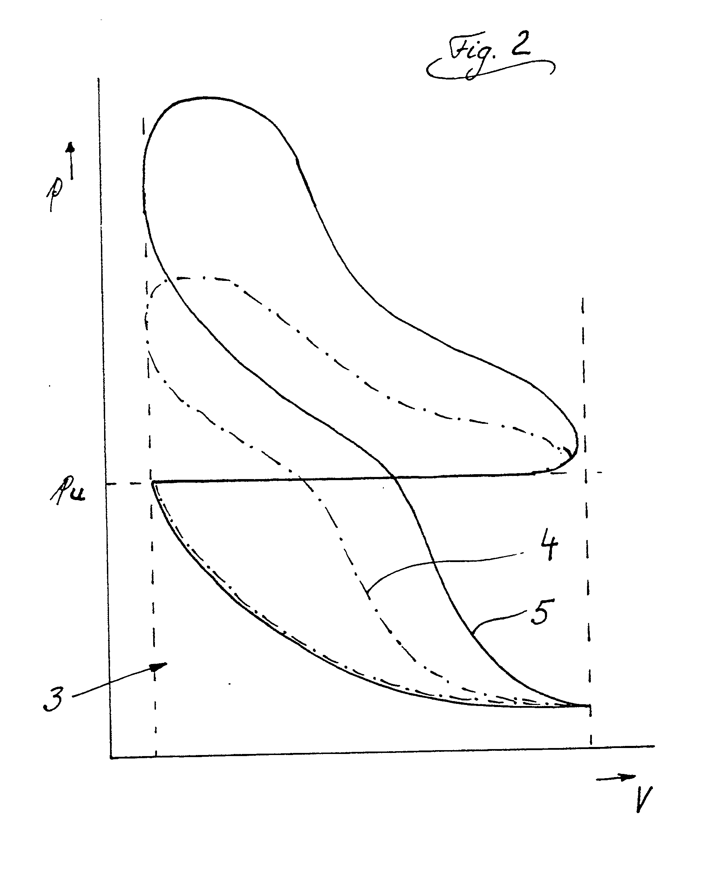

Ein schematisch dargestelltes p-V-Diagramm für zwei verschiedene Brennkraftmaschinenlasten zeigt Fig. 2, wobei die Ladungswechselschleife und die Verbrennungsschleife nicht maßstäblich zueinander dargestellt sind. Der Wert des Umgebungsdruckes ist mit $p_u$ bezeichnet. Im Verlauf der Ladungswechselschleife 3 öffnet erfindungsgemäß das Einlaßventil für niedere Lasten (4) später als für höhere Lasten (5), um hohe Strömungsgeschwindigkeiten und somit eine starke Verwirbelung möglichst nahe dem Ladungszündzeitpunkt sicherzustellen. Die Zündbedingungen werden folglich mit abnehmender Last besser.

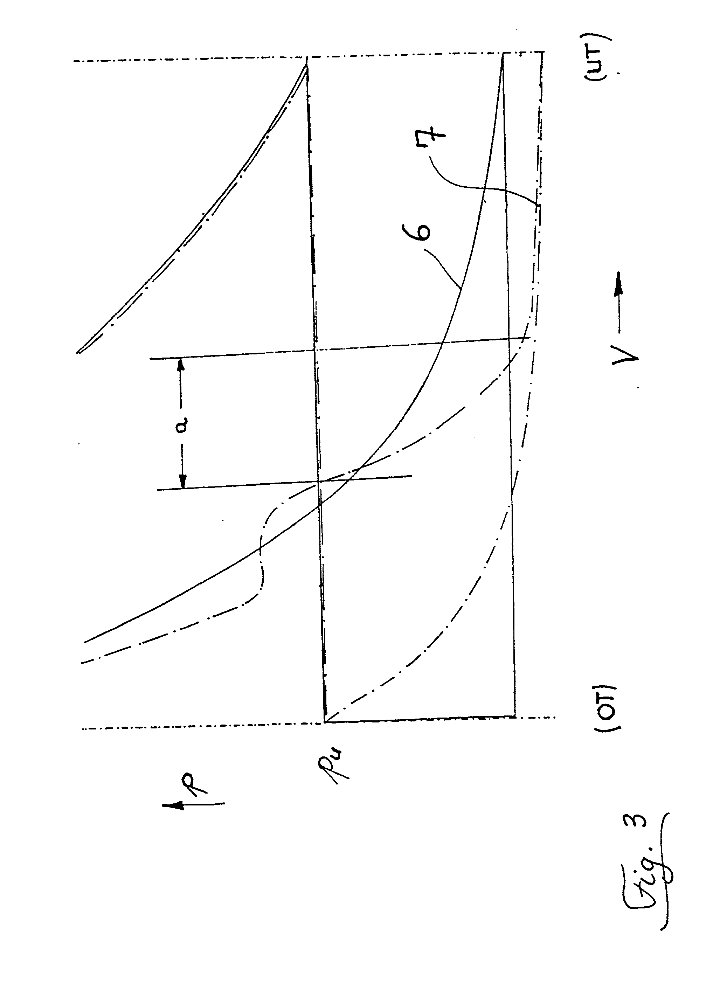

Fig. 3 zeigt zwei Ladungswechselschleifen als Ausschnitt eines p-V-Diagrammes, welche beide einem rechnerisch identischen Teillast-Betriebspunkt einer Hubkolben-Brennkraftmaschine entsprechen. Der mit 6 bezeichnete durchgezogene Kurvenverlauf zeigt ein herkömmliches Ladungswechsel-Verfahren, nach welchem die Ladungszufuhr zum Zylinder über eine Drosselklappe gedrosselt während des dem Verdichtungstakt vorangehenden Saugtaktes erfolgt. Der mit 7 bezeichnete strich-punktierte Kurvenverlauf stellt jene Schleife für ein erfindungsgemäßes Ladungswechsel-Verfahren dar. Wie aus dem insbesondere innerhalb des mit a bezeichneten Volumenabschnittes herrschenden deutlich größeren Druckgradienten ersichtlich ist, strömt hierbei die Ladung mit deutlich höherer Geschwindigkeit und unter wesentlich stärkerer Verwirbelung in den Zylinder.

Mit dem erfindungsgemäßen Ladungswechsel-Verfahren ist somit höchste Zündwilligkeit auch bei einem extrem mageren Gemisch sichergestellt. Eine deutliche Reduktion der Emissionen von Stickoxyden und Kohlenwasserstoffen ist damit ebenso erzielbar wie Verbesserungen im spezifischen Kraftstoffverbrauch.

Das vorliegende erfindungsgemäße Ladungswechsel-Verfahren eignet sich insbesondere für den Teillastbetrieb einer quantitätsgesteuerten Brennkraftmaschine und schafft dabei nicht nur hohe Verwirbelungen im Zylinderbrennraum, bietet somit Vorteile hinsichtlich Brennverlauf, Zündwilligkeit sowie Abgaszusammensetzung, sondern stellt zusätzlich ein äußerst sensibles Laststeuer-Verfahren dar. Während beim herkömmlichen Laststeuer-Verfahren einer quantitätsgesteuerten Brennkraftmaschine mit Hilfe einer Drosselklappe mit zunehmenden Lasten ein immer niedrigeres Druckgefälle vorhanden ist und somit der Ladungswechsel im Hochlastbereich allein aufgrund der kinetischen Energie des Kolbens erfolgt, ist beim erfindungsgemäßen Ladungswechsel-Verfahren das zur Verfügung stehende Druckgefälle nahezu proportional zum anliegenden Lastwunsch. Bei höherem Lastwunsch öffnet das Einlaßventil kurz nachdem der Kolben seinen unteren Totpunkt überschritten hat, bei niedrigerem Lastwunsch erst deutlich später. Dann ist jedoch auch der im Zylinderbrennraum herrschende Unterdruck geringer. Vorteilhafterweise reagiert somit eine nach dem erfindungsgemäßen Ladungswechsel-Verfahren arbeitende Brennkraftmaschine deutlich empfindlicher auf Änderungen des anliegenden Lastwunsches.

## Patentansprüche

1. Ladungswechsel-Verfahren für eine 4-Takt-Hubkolben-Brennkraftmaschine, wobei im 1. Takt durch die Bewegung eines Kolbens das Volumen eines Zylinders vergrößert wird, wobei im 2. Takt, dem sog. Verdichtungstakt, eine Volumenverringerung erfolgt, wobei im wesentlichen im 3. Takt das im Zylinder befindliche Gemisch von Brennstoff und Frischgas verbrannt wird, welches dann im wesentlichen im 4. Takt aus dem Zylinder ausgeschoben wird, dadurch gekennzeichnet, daß die Frischgas-Zufuhr zum Zylinder im wesentlichen im Verdichtungstakt erfolgt, und während des dem Verdichtungstaht vorausgehenden Saugtahtes höchstens eine geringe Menge von Frischgas, verglichen mit der Frischgas zufuhr während des Verdichtungstahtes, durch kurzzeitiges Öffnen eines Steuerorganes während des Saugtahtes, zugeführt wird, und daß ein Ausschieben des zugeführten Frischgases noch während dieses Verdichtungstaktes verhindert wird.

2. Ladungswechsel-Verfahren nach Anspruch 1 für eine quantitätsgesteuerte Brennkraftmaschine, dadurch gekennzeichnet, daß das den Zylindereintritt zur Frischgaszufuhr freigebende Steuerorgan nur so lange geöffnet ist, bis sich die für den jeweiligen Betriebspunkt der Brennkraftmaschine erforderliche Ladung im Zylinder befindet.

3. Ladungswechsel-Verfahren nach Anspruch 2 für eine Brennkraftmaschine mit Hubventilen, dadurch gekennzeichnet, daß der Öffnungszeitpunkt, der Schließzeitpunkt und der maximale Ventilhub der Ventilerhebungskurve dem jeweiligen Betriebspunkt der Brennkraftmaschine angepaßt sind.

4. Ladungswechsel-Verfahren nach einem der vorangegangenen Ansprüche, dadurch gekennzeichnet, daß sich zum Öffnungszeitpunkt des die Frischgaszufuhr freigebenden Steuerorganes aufgrund gesteuerter Ladungsabfuhr während des vorangegangenen Ausschiebetaktes noch ein Rest von verbrannter Ladung im Zylinder befindet.

## Claims

1. A gas-exchange method for a four-stroke reciprocating-piston internal combustion engine, the volume of a cylinder being increased by the movement of a piston in the first stroke, the volume being reduced in the second or "compression" stroke, the mixture of fuel and carburated fuel in the cylinder being burnt substantially in the third stroke, and the mixture being exhausted from the cylinder substantially in the fourth stroke, characterised in that the carburated fuel is supplied to the cylinder substantially during the compression stroke, and during the suction stroke preceding the compression stroke a small quantity at most of carburated fuel, compared with the supply of carburated fuel during the compression stroke, is supplied during the suction stroke by briefly opening a control means, and the supplied carburated fuel is prevented from being exhausted during the compression stroke.

2. A gas exchange process according to claim 1 for a quantity-controlled internal combustion engine, characterised in that the control means for unblocking the cylinder inlet for supplying carburated fuel is open only until the cylinder contains the charge necessary for the respective operating point of the internal combustion engine.

3. A gas exchange process according to claim 2 for an internal combustion engine with upper valves, characterised in that the time of opening, the time of closing and the maximum valve stroke in the valve-lift curve are adapted to the respective operating point of the internal combustion engine.

4. A gas exchange process according to any of the preceding claims, characterised in that a residue of burnt charge remains in the cylinder at the time when the control means unblocking the supply of carburated fuel is opened, owing to the controlled removal of charge during the preceding exhaust stroke.

## Revendications

1. Procédé d'alimentation pour un moteur à combustion interne à 4 temps, à pistons alternatifs, procédé selon lequel a cours du premier temps, le mouvement du piston augmente le volume du cylindre et au cours du second temps c'est-à-dire la compression, il se produit une réduction du volume et principalement au cours du troisième temps, le mélange de carburant et de gaz frais se trouvant dans le cylindre est allumé, ce mélange étant expulsé du cylindre principalement au cours du quatrième temps, procédé caractérisé en ce que l'alimentation en gaz frais du cylindre se fait principalement au cours du temps de compression et pendant le temps d'aspiration qui précède le temps de compression, au plus une faible quantité de gaz frais, comparée à l'alimentation en gaz frais pendant le temps de compression est fournie par l'ouverture de courte durée d'un organe de commande au cours du temps d'aspiration, et en ce que l'expulsion du gaz frais fourni est encore interdite pendant ce temps de compression.

2. Procédé d'alimentation selon la revendication 1 d'un moteur à combustion interne à commande quantitative, caractérisé en ce que l'organe de commande qui libère l'entrée du cylindre pour le gaz frais n'est ouvert que jusqu'à ce que la charge d'alimentation nécessaire pour le point de fonctionnement respectif du moteur se trouve dans le cylindre.

3. Procédé d'alimentation selon la revendication 2 d'un moteur à combustion interne à soupape à mouvement alternatif, caractérisé en ce que l'instant d'ouverture, l'instant de fermeture et la course maximale de la soupape sur la courbe de soulèvement de soupape sont adaptés au point de fonctionnement respectif du moteur à combustion interne.

4. Procédé d'alimentation selon l'une des revendications précédentes, caractérisé en ce qu'à l'instant de l'ouverture de l'organe de commande qui libère l'alimentation de gaz frais, du fait de l'évacuation commandée de la charge pendant le temps d'expulsion précédent, il subsiste encore un reste de la charge brûlée dans le cylindre.

fig. 1

Fig. 2

EP 0 291 792 B1

Fig. 3